# EUROPÄISCHE PATENTSCHRIFT

(11) **EP 4 417 591 B1**
(45) Veröffentlichungstag und Bekanntmachung des Hinweises auf die Patenterteilung: **04.02.2026**
(21) Anmeldenummer: 23188697.9
(22) Anmeldetag: 31.07.2023
(51) Int. Cl.: C04B 28/18, C04B 28/04

(54) **ZUSAMMENSETZUNG FÜR DIE HERSTELLUNG VON BETON, DEREN HERSTELLUNGSVERFAHREN UND VERWENDUNG, SOWIE BETON ENTHALTEND DIESE ZUSAMMENSETZUNG**
COMPOSITION FOR THE PRODUCTION OF CONCRETE, METHOD FOR ITS PRODUCTION AND USE, AND CONCRETE CONTAINING SAID COMPOSITION
COMPOSITION POUR LA PRÉPARATION DE BÉTON, SON PROCÉDÉ DE PRÉPARATION ET SON UTILISATION, ET BÉTON COMPRENANT CETTE COMPOSITION

(43) Veröffentlichungstag der Anmeldung: 21.08.2024
(73) Patentinhaber: Marti AG Solothurn, 4500 Solothurn (CH)
(72) Erfinder: Baumman, Ivan, 3380 Walliswil bei Niederbipp (CH); Frenzer, Guido, 3380 Walliswil bei Niederbipp (CH); Müller, Christoph, 3380 Walliswil bei Niederbipp (CH)
(74) Vertreter: BOVARD AG

(56) Entgegenhaltungen:
- EP-A1- 3 640 224
- EP-A2- 2 695 865
- WO-A1-2016/151388
- WO-A1-2017/223394
- WO-A1-2020/146551
- WO-A1-2021/069285
- WO-A1-2023/122768
- AT-B- 410 089
- US-A1- 2019 071 354
- US-A1- 2022 169 570

## Beschreibung

### Technisches Gebiet der Erfindung

Die vorliegende Erfindung bezieht sich auf eine Zusammensetzung für die Herstellung von Beton. Die Zusammensetzung, auch als Compound bezeichnet, kann als ergänzende, zementartige Materialzusammensetzung bei der Herstellung von Beton, Mörtel, etc. eingesetzt werden, um den Anteil an Zement im Beton signifikant zu reduzieren und gleichzeitig die an den Frischbeton und den ausgehärteten Beton gestellten Erfordernisse zu erfüllen. Mit der signifikanten Reduktion des Zementanteils kann ein Beton mit erheblich reduziertem CO₂-Fussabdruck hergestellt werden.

Die vorliegende Erfindung umfasst auch ein Herstellungsverfahren für diese Zusammensetzung, sowie deren Verwendung, insbesondere als Bindemittel, in Beton sowie als Ersatz für Zement.

Ein weiterer Gegenstand der Erfindung ist zudem Beton, welcher die erfindungsgemässe Zusammensetzung enthält. Diese Betone weisen im Vergleich zu den heutigen Betonen ohne eine derartige Zusammensetzung einen deutlich reduzierten CO₂-Fussabdruck auf.

### Stand der Technik

Beton ist ein künstlicher Stein, der aus einem Gemisch aus Zement, Gesteinskörnung, etwaigen Betonzusatzstoffen und Zusatzmitteln sowie Wasser durch Erhärten entsteht, bezeichnet als Hydratationsprozess. Es ist bekannt, dass Beton für einen hohen CO₂-Ausstoss verantwortlich ist. Dies liegt vor allem an der Verwendung von Zement, dessen Herstellung für einen sehr hohen CO₂-Ausstoss verantwortlich ist und damit schon lange in der Kritik steht. Mit einer erheblichen Reduktion des Zementanteils im Beton bzw. des Klinkeranteils in einem Mischbeton kann der resultierende CO₂-Ausstoss signifikant reduziert werden.

Zement als feingemahlenes, hydraulisches Bindemittel im Beton hat sehr gute Eigenschaften, insbesondere als Bindemittel, welche beim Ersetzen des Zements durch ein weniger umweltschädlicheres Produkt erhalten bleiben sollen. Zement ist jedoch nicht einfach durch solch ein Produkt zu ersetzen ohne die Eigenschaften des Betons zu verändern.

Es gibt Bestrebungen von Seiten der Zementindustrie, den Zement umweltschonender herzustellen, und den Anteil an Zementklinker im Beton zu reduzieren, möglichst ohne die Dauerhaftigkeit und Verarbeitungseigenschaften des Betons zu verschlechtern. So wird bereits heute der klimaschädliche Portlandzementklinker in grossen Anteilen durch reaktive und nicht-reaktive Zementersatzstoffe ersetzt, was sich aber auf die Frischbetoneigenschaften auswirken kann und die Festigkeitsentwicklung sowie die Dauerhaftigkeit der Betone beeinträchtigen kann. Auch mit diesen neuen Zementersatzstoffen ist die Herausforderung, die Eigenschaften heutiger Betonsorten zu erreichen.

Ein anderer Weg zur Reduktion des CO₂-Fussabdruckes führt über die Reduktion vom Zementanteil im Beton. Hier ist ebenso jedoch die Herausforderung, die Frisch- und Festbetoneigenschaften der heutigen Betonsorten zu erreichen.

Einer der dabei verfolgten Ansätze ist ein emissionsärmeres Bindemittel anstelle von Zement bereitzustellen, wobei die restlichen Bestandteile des Betons unverändert bleiben. Hierfür könnten beispielsweise der Klinker Celitement, kalzinierte Tonerde oder weitere alkalische aktivierte Geopolymere geeignet sein, welche aber nicht oder nur beschränkt unter wirtschaftlichen Bedingungen verfügbar sind. Ferner gibt es den Ansatz den als umweltschädlich bekannten Portlandzementklinker durch Ersatzstoffe zu ersetzen, die als Nebenprodukte bei Herstellungsprozessen anderer Industrien anfallen. Allerdings sind die bekannten Ersatzstoffe weniger reaktiv und ihre Verfügbarkeit und Qualität richtet sich nach der Produktion ihrer Quellindustrien und kann unter anderem stark schwankend sein.

Aus WO 2016/151388 ist eine Betonzusammensetzung bekannt, in welchem ein hydraulisches Bindemittel enthalten ist, welches 35 - 45 Gew.-% gewöhnlichen Portlandzement und 55 - 65 Gew.-% eines ergänzenden zementartigen Materials und weitere Bestandteile, wie Aggregaten und Wasserreduzierer, umfasst, wobei ein spezifizierter Wasser-Bindemittel-Wert vorliegt. Demnach wird ein definierter Anteil des Portlandzements durch verschiedene Mineralzusätze ausgetauscht, z.B. granulierte Hochofenasche, Flugasche, natürliche Puzzolane, kalzinierte Tone, gemahlener Kalkstein oder Gemische davon. Als weitere Parameter werden der Tricalciumaluminat-, der Tricalciumsilicat- und der Sulfat-Gehalt, die Blaine-Feinheit sowie die Basizität des hydraulischen Bindemittels angegeben, um Eigenschaften des Frischbetons und des gehärteten Betons zu erreichen. Hierbei ist nachteilig, dass die Verfügbarkeit und die Qualität der Mineralzusätze, insbesondere von Hochofenasche und Flugasche, schwankend ist und darüber hinaus bei letzterem eng gekoppelt ist an Kohlekraftwerke, deren Zukunft ungewiss ist. Ferner zeigt ein derartig zusammengesetzter Beton aufgrund seines eventuell höheren Wasseranspruchs schlechtere Frisch- und Festbetoneigenschaften, die durch entsprechende Zusätze nur teilweise aufgefangen werden können.

Aus US 2022/0169570 ist eine puzzolanisch aktive Vormischung (Korngrösse < 75 µm, Blaine 5'000-10'000 cm²/g) bekannt enthaltend 20-85 Gew.-% aktivierten Ton, 10-75 Gew.-% Kalkstein (mind. 50 Gew.-% Calciumcarbonat) und 3-15 Gew.-% Calciumsulfat-haltigen Erstarrungsregler, welche als wenigstens 20 Gew.-%iger - möglicherweise auch 30-40 Gew.-%iger oder 40-60 Gew.-%iger - Zementersatz in Bindemittel- und Betonmischungen dient.

Die erfindungsgemässe Zusammensetzung ist ein anderer Lösungsansatz für die zukunftsorientierte, deutlich CO₂-reduzierte Herstellung und Verwendung von Beton als weitverbreitet eingesetzter Baustoff.

Es besteht weiterhin der Bedarf nach einer Zusammensetzung für die Betonherstellung, die eine optimale Makro-Mikro-Nano-Partikelpackung bei gleichzeitig geringem Zementanteil bereitstellen kann und die Eigenschaften sowohl des Frischbetons (z.B. Zusammensetzung und Menge des sogenannten Zementleims) als auch des ausgehärteten Betons (z.B. Packungsdichte des sogenannten Zementsteins), welcher die Zusammensetzung enthält, im Vergleich zu den heutigen Betone vergleichbar erfüllt oder gar verbessert.

### Zusammenfassung der Erfindung

Dieser Bedarf wird durch die erfindungsgemässe Zusammensetzung bzw. einen Beton, der diese enthält, gedeckt.

Die Erfindung bezieht sich auf eine Zusammensetzung, insbesondere eine trockene pulverförmige Zusammensetzung, einsetzbar zur Herstellung von Beton, wobei dieser Beton, Spannbeton, Stahlbeton, Mörtel sein kann. Bevorzugt weist der Beton, der diese Zusammensetzung als Bindemittelvormischung umfasst, nicht nur einen reduzierten Anteil an Zementklinker auf, sondern auch einen insgesamt geringeren Anteil an Zement gegenüber dem üblichen Beton. Dementsprechend kann mit der vorliegenden Erfindung erreicht werden, dass die von den Ausgangsstoffen der Betonherstellung verursachten Umweltwirkungen, insbesondere die CO₂-Emissionen, durch eine Reduktion des Zementanteils (und insbesondere an Klinker). Darüber hinaus bietet die Zusammensetzung gemäss der Erfindung den Vorteil, dass gezielt Eigenschaften des Frischbetons und/oder des erhärteten Betons einstellbar sind. So wird besonderes auf die granulometrischen Eigenschaften der internen Körnung (auch Korngrössenverteilung genannt) der Zusammensetzung geachtet, welche die erreichbare Packungsdichte im Beton steigert, die in Zusammenhang mit dem Zementgehalt steht und die Verarbeitungseigenschaften beeinflusst.

Die erfindungsgemässe Zusammensetzung zur Herstellung von Beton, das sogenannte "Compound", enthält
a) 0.5 - 60 Gew.-% Calciumcarbonat, wobei das Calciumcarbonat einen Blaine-Wert von 3'000 bis 150'000 cm²/g aufweist;
b) 0.5 - 10 Gew.-% Siliciumdioxid (Mikrosilica), wobei das Siliciumdioxid einen Blaine-Wert von etwa 100'000 bis 300'000 cm²/g aufweist;
c) 5 - 40 Gew.-% einer Komponente c) mit latent hydraulischer Aktivität, wobei die Komponente c) ein Puzzolan, Flugasche oder aktiviertes Phonolith oder eine Mischung davon ist, wobei bevorzugt die Komponente c) Flugasche oder aktiviertes Phonolith oder eine Mischung davon ist, wobei besonders bevorzugt die Komponente c) aktiviertes Phonolith ist, wobei die Komponente c) einen Blaine-Wert von 1'000 bis 7'000 cm²/g hat;
d) 5 - 45 Gew.-% Calciumhydroxid, wobei das Calciumhydroxid eine Partikelgrössenverteilung hat, welche bei einem 0.063 mm-Sieb einen Siebdurchgang von 98 Gew.-% aufweist; und
e) 1 - 25 Gew.-% Kieswerkfüller, wobei der Kieswerkfüller e) eine Partikelgrössenverteilung hat, welche bei einem 0.063 mm-Sieb einen Siebdurchgang von ca. 70 Gew.% und bei einem 0.125 mm-Sieb einen Siebdurchgang von ca. 90 Gew.-% aufweist, und/oder einen Blaine-Wert im Bereich von 500 bis 5'000 cm²/g hat;
wobei sich die Menge jeweils auf das Gesamtgewicht der Zusammensetzung bezieht, und wobei die Summe aller Bestandteile a) bis e) der Zusammensetzung 100 Gew.-% ergeben.

Hierbei unterscheiden sich die einzelnen Komponenten hinsichtlich ihres Blaine-Wertes, d.h. in ihrem Grad der Feinvermahlung, angegeben als mit einem Blaine-Gerät ermittelte spezifische Oberfläche in cm²/g.

So wird in einem besonders bevorzugten Compound vorteilhafterweise Calciumcarbonat mit einem Blaine-Wert im Bereich von 5'000 bis 110'000 cm²/g, besonders bevorzugt im Bereich von 10'000 bis 90'000 cm²/g, Siliciumdioxid mit einem Blaine-Wert im Bereich von 150'000-250'000 cm²/g, besonders bevorzugt in einem Bereich von 180'000 bis 220'000 cm²/g, die Komponente c) mit latent hydraulischer Aktivität, insbesondere ein Puzzolan, Flugasche oder aktiviertes Phonolith oder eine Mischung davon, mit einem Blaine-Wert im Bereich von 1'500 bis 6'500 cm²/g, besonders bevorzugt im Bereich von 2'000-6'000 cm²/g, ganz besonders bevorzugt im Bereich von 2'500 bis 5'500 cm²/g, Calciumhydroxid mit einer BET-Oberfläche im Bereich von 10'000 bis 30'000 cm²/g, bevorzugt im Bereich von 15'000 bis 25'000 cm²/g, besonders bevorzugt im Bereich von 18'000 - 21'000 cm²/g und Kieswerkfüller mit einem Blaine-Wert im Bereich von 1'000 bis 4'000 cm²/g, bevorzugt im Bereich von 2'000 bis 3'000 cm²/g, eingesetzt.

Demnach decken die Komponenten des Compounds einen Bereich der Feinheit mit einem Blaine-Wert im Bereich von 500 bis 300'000 cm²/g, bevorzugt im Bereich von 1000 bis 250'000 cm²/g, besonders bevorzugt im Bereich von 2'000 bis 220'000 cm²/g ab.

Die unterschiedlichen Komponenten des Compounds haben unterschiedliche Wirkungen auf die Frisch- bzw. Festbetoneigenschaften, und lassen so eine Vielzahl von Kombinationsmöglichkeiten zu, je nachdem welche Zielsetzung angestrebt wird. Diese zu erreichenden unterschiedlichen Betoneigenschaften, insbesondere mechanische Eigenschaften, beziehen sich beispielsweise auf die Abbindekinetik, Schwind- und/oder Kriecheigenschaft, sowie Frühfestigkeit und die Druckfestigkeit nach 28 Tagen, Dauerhaftigkeit, etc. Ferner kann zur Beurteilung der Festbetoneigenschaften die Biegefestigkeit und/ oder das E-Modul herangezogen werden, ebenso wie zur Beurteilung der Dauerhaftigkeit Kennwerte wie mikroskopische Gefügebeurteilung, Karbonatisierungswiderstand, Sauerstoffpermeabilität, Chloridleitfähigkeit und/oder Frostmittelwiderstand, wobei diese Aufzählung an Eigenschaften nicht abschliessend ist.

Bevorzugt enthält die erfindungsgemässe Zusammensetzung ausserdem
f) 0.05 - 5 Gew.-% Fliessmittel, und
g) 0.05 - 5 Gew.-% Schwindreduzierer
wobei sich die Menge jeweils auf das Gesamtgewicht der Zusammensetzung bezieht, und wobei die Summe aller Bestandteile a) bis g) der Zusammensetzung 100 Gew.-% ergeben.

Die einzelnen Bestandteile/Komponenten des Compounds stehen miteinander im Wechselspiel: So erzeugt beispielsweise ein hoher Anteil an aktiviertem Phonolith einen höheren Wasseranspruch im Beton und der daraus resultierende geringere Anteil an Nanopartikeln beeinflusst die zu erreichende Dichte im Betongefüge, wobei beide Effekte durch variierende Anteile der weiteren Komponenten beeinflusst werden können.

Zu beachten ist auch, dass die Rieseleigenschaft der Komponenten sowie die Homogenität der erfindungsgemässen Zusammensetzung gegeben ist. Ebenso spielt die Vermischung der einzelnen Bestandteile eine Rolle, so dass auch die Herstellung des Compounds eine sorgfältige Vorgehensweise erforderlich macht. Dadurch wird sichergestellt, dass die erfindungsgemässe Zusammensetzung in das Silo im Betonwerk eingeblasen und für die Betonproduktion wieder dem Silo entnommen werden kann. Andernfalls könnte eine zügige und genaue Dosierung der erfindungsgemässen Zusammensetzung bei der Betonproduktion nicht gewährleistet werden.

Der auf Basis des Compounds bzw. dieser Betonvormischung herstellbare Beton ist vorzugsweise genauso gut oder sogar besser als herkömmliche Betone, d.h. Betone ausgewählter Festigkeitsklassen mit definierten Frisch- und Festbetoneigenschaften. Somit steht einem Betonhersteller mit der erfindungsgemässen Zusammensetzung ein Mittel zur Verfügung, Beton insbesondere für den Hochbau gemäss seinen individuellen Vorgaben CO₂-reduziert und entsprechend der in Normen hinterlegten Betoneigenschaften herzustellen. Beispielsweise für Beton der NPK (Normpositionenkatalog) C-Klasse schreibt die Norm SN EN 206 vor, welche Anforderungen hinsichtlich Konsistenz, Festigkeit mit 28 Tagen und Dauerhaftigkeit einzuhalten sind. Neben Betonen im Hochbau werden auch Betone für den Tiefbau mit einem reduzierten CO₂-Fussabdruck auf diese Weise hergestellt.

Die erfindungsgemässe Zusammensetzung weist Bestandteile auf, deren Partikelgrössen im Nanobereich, im Mikrobereich und im Makrobereich liegen und als Bindemittel sowie als Betonzusatzstoffe bei teilweisem Ersatz von Zement in einem herzustellenden Betonmaterial wirken. So erlaubt die erfindungsgemässe Zusammensetzung gemäss einer Ausführungsform der Erfindung, dass der Gehalt von Zement in einem verbreitet produzierten Beton des Typs C330-0 signifikant reduziert werden kann. Demnach enthält ein Beton diesen Typs anstelle von 280 - 300 kg/m³ Zement einen deutlich reduzierten Anteil an Zement, beispielsweise 175 kg/m³, wobei die fehlende Zementmenge von 105 kg/m³ unter anderem durch das Compound gemäss einer Ausführungsform der Erfindung ersetzbar ist, vorzugsweise in Kombination mit einem weiteren Betonzusatzstoff, beispielsweise dem bekannten Hydrolith^{®} F200 oder einem vergleichbares Produkt. Hydrolith^{®} F200 ist ein aktivierter Phonolith und als latent hydraulischer Zusatzstoff Typ II anerkannt, der bei der Hydratation des Zements selbst und zusätzlich einen Festigkeitsbeitrag leisten. Statt des aktivierten Phonoliths könnte auch ein anderer hydraulisch aktiver Zusatzstoff Typ II verwendet werden wie beispielsweise ein Puzzolan, Flugasche oder deren Mischungen mit aktiviertem Phonolith. Bevorzugt wird Flugasche oder aktiviertes Phonolith oder eine Mischung davon verwendet, besonders bevorzugt aktiviertes Phonolith, insbesondere Hydrolith^{®} F200.

Allgemein sind Bindemittel in einem Beton vor allem anorganische Substanzen, die mit Wasser vermischt über eine bestimmte Zeitspanne erhärten und dabei andere Komponenten fest miteinander verbinden. Derartige Bindemittel sind üblicherweise mineralischen Ursprungs und werden herkömmlicherweise aus bestimmten Gesteinen durch Brennen gewonnen und mehlfein gemahlen. Die Bindungseigenschaften entfalten sich in der Mischung mit Wasser und einer chemischen Umsetzung, der sogenannten Hydratation, und/oder durch physikalische Oberflächenkräfte beim Verfestigen. Ein latent hydraulischer Zusatzstoff Typ II wie beispielsweise das Hydrolith^{®} F200 benötigt für die chemische Reaktion eine bestimmte Menge an Calciumhydroxid. Bei der Hydratation von Zement mit Wasser entsteht Calciumhydroxid, so dass diese Quelle für Calciumhydroxid mit der Reduktion des Zementanteils im Beton abnimmt und die Reaktionsfähigkeit des latent hydraulischen Zusatzstoff Typ II ebenfalls beeinflusst.

Die erfindungsgemässe Zusammensetzung ist geeignet, die Leistungsfähigkeit eines herzustellenden Betons zu erhalten, welche direkt vom wirksamen Wassergehalt abhängig ist. Der wirksame Wassergehalt ergibt sich aus dem Gesamtwasser, welches dem Beton eingemischt wird, abzüglich der Wassermenge, welche von der Gesteinskörnung aufgenommen/absorbiert wird. So wirkt sich ein geringerer Wassergehalt tendenziell negativ auf die Verarbeitbarkeit des Frischbetons aus, welches sich in der Konsistenz und dem Ansteifverhalten des Frischbetons bemerkbar macht, hat jedoch grundsätzlich einen positiven Einfluss auf die Festbetoneigenschaften, sofern dieser unter diesen Bedingungen verarbeitbar ist.

Ein Beton, der die erfindungsgemässe Zusammensetzung enthält, lässt sich je nach Betonsorte mit einem wirksamen Wassergehalt von 100 bis 200 I Wasser pro m³ Frischbeton verarbeiten, beispielsweise für Beton C330-0 liegt der wirksame Wassergehalt in etwa bei 125 - 145 l/m³. Hierbei ist unter wirksamen Wassergehalt derjenige Anteil des zugesetzten Wassers zu verstehen, welcher vollständig oder beschränkt zur Hydratation zur Verfügung steht und nicht von einem Teil der Gesteinskörnung aufgenommen wird. Die Angabe des wirksamen Wassergehalts kann im Falle eines Betons mit sehr reduziertem Zementgehalt der bisher üblichen Angabe des Wasser/Zement-oder Wasser/ Bindemittel-Wertes vorgezogen werden.

Die Bestandteile a) bis g) der erfindungsgemässen Zusammensetzung werden im Folgenden näher beschrieben. Hierbei umfasst die vorliegende Erfindung jede beliebige Kombination der bevorzugten Varianten der einzelnen Bestandteile a) bis g) untereinander.

### Bestandteil a)

Der Bestandteil a) der Zusammensetzung ist ein mineralischer Betonzusatzstoff in Form von Gesteinsmehl, bevorzugt Kalksteinmehl CaCOs. Dieser Zusatzstoff verbessert im herzustellenden Beton aufgrund einer geringen Korngrösse, aufgrund der Kornzusammensetzung und aufgrund der Kornform den Kornaufbau im Nano-, Mikro- und Makrometerbereich, welcher für die Verarbeitbarkeit und für ein geschlossenes, sehr dichtes Gefüge von Bedeutung ist.

Bevorzugt ist der Bestandteil a) Kalksteinmehl, welches unterschiedlichen Ursprungs sein kann. Beispielsweise kann Calciumcarbonat aus verschiedenem natürlichem Gestein oder als ausgefälltes ultrafeines Calciumcarbonat gewonnen werden, wobei die Basis ein kohlensäurehaltiges Gestein oder allgemeiner ein mineralisches Material ist. Als natürliches Gestein eignet sich Marmor, Kreide, Calcit oder vergleichbares Gestein. Vorzugsweise ist das eingesetzte Kalksteinmehl reines Calciumcarbonat mit einem Calciumcarbonat-Anteil ≥ 95 Gew.-%. Das Kalksteinmehl trägt insbesondere zu einer besseren Verarbeitbarkeit des Frischbetons, zu einer höheren Frühfestigkeit und zu einer höheren Dauerhaftigkeit des Betons bei, z.B. einem höheren Karbonatisierungswiderstand.

Erfindungsgemäss hat das Calciumcarbonat einen Blaine-Wert im Bereich von 3'000 bis 150'000 cm²/g, bevorzugt im Bereich von 5'000 bis 110'000 cm²/g, besonders bevorzugt im Bereich von 10'000 bis 90'000 cm²/g.

Üblicherweise liegt der Bestandteil a) in der erfindungsgemässen Zusammensetzung in einer Menge von 0.5 - 60 Gew.-% vor, d.h. pro Tonne der erfindungsgemässen Zusammensetzung sind 5 - 600 kg Calciumcarbonat enthalten. Weiter bevorzugt in einer Menge von 10 bis 57 Gew.-%, besonders bevorzugt in einer Menge von 20 bis 55 Gew.-%, ganz besonders bevorzugt in einer Menge von 25 bis 50 Gew.-%, wobei sich die Menge jeweils auf das Gesamtgewicht der Zusammensetzung bezieht.

Bevorzugt wird als Bestandteil a) eine Mischung aus einem ultrafeinen Calciumcarbonat-Pulver a1) sowie einem feinen Calciumcarbonat-Pulver a2) eingesetzt. Die beiden Bestandteile a1) und a2) werden hierbei bevorzugt in einem Gewichtsverhältnis a1) zu a2) von 1:1 bis 4:6 bzw. 6:4 eingesetzt, bezogen auf das oben erwähnten Gesamtgewicht.

Bevorzugt weist das als Bestandteil a1) eingesetzte Calciumcarbonat eine mittlere Partikelgrösse d₅₀ kleiner gleich 1 µm und einen Blaine-Wert von ca. 86'000 cm²/g auf. Diese Form des Calciumcarbonats fungiert insbesondere als Keimbildner und Wachstumsort für Zementpartikel und beschleunigt somit den Aushärteprozess und verbessert die Frühfestigkeit.

Bevorzugt weist das als Bestandteil a2) eingesetzte Calciumcarbonat eine mittlere Partikelgrösse d₅₀ im Bereich bis zu 3 µm und einen Blaine-Wert von ca. 11'400 cm²/g auf. Dieser Typ des Calciumcarbonats ist massgeblich für eine zu erreichende Packungsdichte und die rheologischen Eigenschaften der herzustellenden Produkte.

### Bestandteil b)

Der Bestandteil b) der Zusammensetzung ist ein weiterer mineralischer Betonzusatzstoff, wobei es sich chemisch um Siliciumdioxid handelt. Die zu beachtenden Parameter dieses Bestandteils sind die Feinheit und die Reinheit.

Bevorzugt wird Mikrosilica in einer ultrafeinen Form eingesetzt, d.h. ein amorpher Kieselsäure-Staub mit einer mittleren Partikelgrösse d₅₀ im Nanometerbereich. Dieser hochfeine, puzzolanische Zusatzstoff steigert die Festigkeit, erhöht die Widerstandskraft gegen chemische Angriffe und die Dauerhaftigkeit sowie die Abbriebsbeständigkeit des Betons. Mikrosilica oder auch als Silicastaub bezeichenbar, füllt den Porenraum zwischen Zementkörnern und trägt zur Reduktion der Wasserdurchlässigkeit des Betons und/oder Mörtels bei. Mikrosilica weist puzzolanische Eigenschaften auf, so dass das im Zement vorliegende Calciumhydroxid in die Calciumsilikathydrat-Phasen eingebunden wird. Als puzzolanische Reaktion wird die chemische Reaktion von Calciumhydroxid und Siliziumdioxid zu Calziumsilikathydraten verstanden.

Erfindungsgemäss hat das Siliciumdioxid einen Blaine-Wert im Bereich von 100'000 bis 300'000 cm²/g, bevorzugt in einem Bereich von 150'000-250'000 cm²/g, besonders bevorzugt in einem Bereich von 180'000 bis 220'000 cm²/g.

Ganz besonders bevorzugt wird ein amorphes Siliciumdioxid mit einer Primärkörnung im Bereich von 0,1 bis 0,3 µm, einer spezifischen Oberfläche im Bereich von 18-22 m²/g und einem Blaine-Wert von 180'000 bis 220'000 cm²/g eingesetzt.

Üblicherweise liegt der Bestandteil b) in der erfindungsgemässen Zusammensetzung in einer Menge von 0,5 bis 10 Gew.-%, bevorzugt in einer Menge von 1 bis 5 Gew.-%, besonders bevorzugt in einer Menge von 1,2 bis 4,0 Gew.-%, ganz besonders bevorzugt in einer Menge von 1,3 bis 3,0 Gew.-%, vor, wobei sich die Menge jeweils auf das Gesamtgewicht der Zusammensetzung bezieht.

Das Mikrosilica trägt insbesondere zur 28-Tage Festigkeit und Dauerhaftigkeit des Betons bei, wobei sich mit sich erhöhendem Anteil an Bestandteil b) die Konsistenz verschlechtert und der Frischbeton klebriger wird.

### Bestandteil c)

Der Bestandteil c) der erfindungsgemässen Zusammensetzung hat latent hydraulische Eigenschaften und ist vorzugsweise ein Puzzolan, Flugasche oder aktiviertes Phonolith oder eine Mischung davon. Bevorzugt ist die Komponente c) Flugasche oder aktiviertes Phonolith oder eine Mischung davon. Besonders bevorzugt ist die Komponente c) aktiviertes Phonolith.

Sowohl Puzzolane, als auch Flugasche und aktiviertes Phonolith, sowie deren Mischungen sind latent hydraulisch (Beton-Zusatzstoff Typ II). Die latent hydraulische Eigenschaft wird mittels einer Festigkeitsentwicklung gemessen. Dieser Beitrag zur Festigkeitsentwicklung des Betons kann mittels k-Wert entsprechend im Bindemittelgehalt des Betons berücksichtigt werden. Je nach Herkunft haben die Materialien eine unterschiedliche Aktivität und somit einen unterschiedlichen Beitrag für die Betoneigenschaften.

Puzzolane sind künstliche oder natürliche Gesteine aus Siliciumdioxid, Tonerde, Kalkstein, Eisenoxid und alkalischen Stoffen, die zumeist unter Hitzeeinwirkung entstanden sind. Puzzolane werden als Zuschlagstoffe zur Herstellung von Beton verwendet, denn zusammen mit Calciumhydroxid (Kalkhydrat) und Wasser reagieren Puzzolane hydratisch und bilden in der puzzolanischen Reaktion Calciumsilicathydrate und Calciumaluminathydrate. Dies sind die gleichen kristallinen Verbindungen, die auch während der Härtung des Zements entstehen und welche die Festigkeit und Gefügedichtigkeit des Betons bewirken.

Phonolith ist ein puzzolanisches Gestein, welches ein natürliches oder künstliches Gestein aus Siliciumdioxid, Tonerde, Kalkstein, Eisenoxid und alkalischen Stoffen ist. Vorzugsweise wird ein natürliches Puzzolan, insbesondere ein getemperter Phonolith, eingesetzt. Natürliche Puzzolane liegen entweder als magmatisches Gestein, d.h. als vulkanischer Tuff oder Trass oder auch als Sedimentgestein mit einem hohen Anteil löslicher Kieselsäure und Tonerde vor. So ist Phonolith aus einem magmatischen Gestein extrusiver Herkunft gewinnbar, welches in vulkanisch geprägten Regionen abbaubar ist, beispielsweise am Kaiserstuhl/Deutschland. Geeignete Phonolithe, insbesondere mit einem Blaine-Wert von 2'500 bis 5'500 cm²/g, können auch aus anderen Gebieten im In- und Ausland bezogen werden, wobei aus ökonomischer und ökologischer Sicht hier eine vernünftige Quelle zu bevorzugen ist.

Die Aktivierung des Phonoliths erfolgt beispielsweise durch Mahlen des Phonoliths und anschliessendes Tempern bei einer Temperatur bei oder über 400°C. Wichtig ist, dass der Phonolith durch das Aktivieren latent hydraulische Eigenschaften erhält. Für die Aktivierung sind auch andere der Fachperson bekannte Methoden anwendbar.

Flugasche ist der feste, disperse Rückstand von Verbrennungen, der auf Grund seiner hohen Dispersität mit den Rauchgasen ausgetragen wird. Flugasche entsteht in großen Mengen in Wärmekraftwerken und muss dort durch Entstauber aus den Rauchgasen abgeschieden werden. Die Partikelgröße reicht von etwa 1 µm bis 1 mm. Die Dichte beträgt 2,2 bis 2,4 kg/dm³, die Schüttdichte liegt zwischen 0,9 und 1,1 kg/dm³. Bevorzugt handelt es sich um Flugasche aus einheitlichen, gleichbleibenden Brennstoffen wie Steinkohle.

Die Komponente c), insbesondere Flugasche oder das aktivierte Phonolith sowie deren Mischungen, hat vorzugsweise einen Blaine-Wert im Bereich von 1'000 bis 7'000 cm²/g, bevorzugt im Bereich von 1'500 bis 6'500 cm²/g, besonders bevorzugt im Bereich von 2'000-6'000 cm²/g, ganz besonders bevorzugt im Bereich von 2'500 bis 5'500 cm²/g.

Üblicherweise liegt der Bestandteil c) in der erfindungsgemässen Zusammensetzung in einer Menge von 5 bis 40 Gew.-% vor, bevorzugt in einer Menge von 10 bis 28 Gew.-%, besonders bevorzugt in einer Menge von 12 bis 26 Gew.-%, ganz besonders bevorzugt in einer Menge von 13 bis 23 Gew.-%, wobei sich die Menge jeweils auf das Gesamtgewicht der Zusammensetzung bezieht.

Die Komponente c), insbesondere der aktivierte Phonolith bzw. die Flugasche sowie die Puzzolane und deren Mischungen, tragen insbesondere zur Rieseleigenschaft, 28-Tage-Festigkeit und Dauerhaftigkeit des Betons bei.

### Bestandteil d)

Ein weiterer Bestandteil der erfindungsgemässen Zusammensetzung ist Calciumhydroxid, sog. "Kalkhydrat". Dieser Bestandteil bildet unter Zugabe von Wasser und mit dem enthaltenen Phonolith Kristalle, welche auch bei der Erhärtung, d.h. der Hydratation, von Zement entstehen und so Einfluss nehmen auf die Festigkeit und Gefügedichtigkeit der herzustellenden Betone.

Erfindungsgemäss weist das Calciumhydroxid eine Partikelgrössenverteilung auf, welche bei einem 0.063 mm-Sieb einen Siebdurchgang von ca. 98 Gew.-% hat.

Vorteilhafterweise hat das Calciumhydroxid eine BET-Oberfläche im Bereich von 10'000 bis 30'000 cm²/g, bevorzugt im Bereich von 15'000 bis 25'000 cm²/g, besonders bevorzugt im Bereich von 18'000 - 21'000 cm²/g.

Der Blaine-Wert des Calciumhydroxids ist bevorzugt etwa ≤ 50'000 cm²/g.

Üblicherweise liegt Calciumhydroxid in der erfindungsgemässen Zusammensetzung in einer Menge von 5 bis 45 Gew.-% vor, bevorzugt in einer Menge von 15 bis 40 Gew.-%, besonders bevorzugt in einer Menge von 20 bis 36 Gew.-%, ganz besonders bevorzugt in einer Menge von 25 bis 33 Gew.-%, wobei sich die Menge jeweils auf das Gesamtgewicht der Zusammensetzung bezieht.

Das Kalkhydrat trägt insbesondere positiv zur Konsistenz, d.h. der Steifigkeit und somit zur Verarbeitbarkeit, sowie dem Zusammenhalt des Frischbetons, sowie zu besseren Festbetoneigenschaften wie beispielsweise einer höheren Dauerhaftigkeit, insbesondere der Karbonatisierung durch die Erhöhung des CaO-Gehaltes, bei. Die Konsistenz des Frischbetons ist demnach massgeblich für Fördern, Einbringen und Verdichten des Frischbetons und sollte vor Baubeginn festgelegt sein und während der Bauausführung eingehalten werden. Demnach sollte der Anteil an Calciumhydroxid zwischen einer unteren Grenze liegen, um einen Nutzen zu erzielen und einer oberen Grenze, um den Wasseranspruch und die Klebrigkeit nicht übermässig ansteigen zu lassen.

Das Calciumhydroxid kann eine bestimmte Menge an weiteren Bestandteilen wie beispielsweise Magnesiumhydroxid enthalten, z.B. in einer Menge bis zu 8 Gew.-%.

### Bestandteil e)

Ein weiterer Bestandteil der Zusammensetzung ist der Kieswerkfüller, auch als Kieswerkgesteinsmehl bezeichenbar. Beim Brechen von Komponenten im Kieswerk entsteht neben Brechsand und Splitte Staub, welcher in einer Entstaubungsanlage abgetrennt wird.

Erfindungsgemäss weist der Kieswerkfüller eine Partikelgrössenverteilung auf, welche bei einem 0.063 mm-Sieb einen Siebdurchgang von ca. 70 Gew.-% und bei einem 0.125 mm-Sieb einen Siebdurchgang von ca. 90 Gew.-% hat; und/oder
einen Blaine-Wert im Bereich von 500 bis 5'000 cm²/g, bevorzugt im Bereich von 1'000 bis 4'000 cm²/g, bevorzugt im Bereich von 2'000 bis 3'000 cm²/g.

Üblicherweise liegt der Kieswerkfüller in der erfindungsgemässen Zusammensetzung in einer Menge von 1 bis 25 Gew.-% vor, bevorzugt in einer Menge von 1.5 bis 20 Gew.-%, besonders bevorzugt in einer Menge von 2 bis 15 Gew.-%, ganz besonders bevorzugt in einer Menge von 3 bis 10 Gew.-%, wobei sich die Menge jeweils auf das Gesamtgewicht der Zusammensetzung bezieht.

Der Kieswerkfüller verbessert insbesondere die Rieseleigenschaft der erfindungsgemässen Zusammensetzung, welches sich beim Bezug aus einem Silo oder einem anderen Vorratsbehälter bemerkbar macht und für den gesicherten Bezug und eine exakte Dosierung massgeblich ist. Der Kieswerkfüller weist den tiefsten Blaine-Wert der Komponenten a) bis g) des Compounds auf. Auch dieser Bestandteil e) kann in in einer optimalen Menge im Compound enthalten sein, wobei hierbei einerseits die Rieseleigenschaft und andererseits die Dichtigkeit des Gefüges und die Kosten zu beachten sind, welche in Zusammenhang mit dem an sich günstigen Bestandteil e) stehen. Je mehr Bestanteil e) zugesetzt wird, um so rieselfähiger und kostengünstiger ist die Zusammensetzung aber auch umso weniger dicht ist das Gefüge.

### Bestandteil f)

Das Fliessmittel trägt zur Wasserreduktion und Verbesserung der Konsistenz des Frischbetons bei.

Das Fliessmittel liegt in trockener Pulverform bevorzugt in einer Menge von 0,05 bis 1,0 Gew.-%, besonders bevorzugt in einer Menge von 0,1 bis 0,8 Gew.-%, ganz besonders bevorzugt in einer Menge von 0,3 bis 0,7 Gew.-%, vor, wobei sich die Menge jeweils auf das Gesamtgewicht der Zusammensetzung bezieht.

### Bestandteil g)

Der Schwindreduzierer trägt zur Schwindreduktion, zum besseren Zusammenhalt des Frischbetons sowie zu einem dichteren Gefüge vom Festbeton bei. So könnte sich der Luftgehalt im Festbeton mittels des eingesetzten Schwindreduzierers verringern, so dass sich dies positiv auf die Festigkeit und die Dauerhaftigkeit des Festbetons auswirkt.

Der Schwindreduzierer liegt bevorzugt in einer Menge von 0,05 bis 1,0 Gew.-%, besonders bevorzugt in einer Menge von 0,06 bis 0,8 Gew.-%, ganz besonders bevorzugt in einer Menge von 0,08 bis 0,12 Gew.-% vor, wobei sich die Menge jeweils auf das Gesamtgewicht der Zusammensetzung bezieht.

### Verfahren zur Herstellung der erfindungsgemässen Zusammensetzung

Das Verfahren zur Herstellung der erfindungsgemässen Zusammensetzung enthält die folgenden Schritte und ist ebenfalls Gegenstand der vorliegenden Erfindung:
i) Bereitstellen der Bestandteile a) bis e) bzw. a) bis g) in den genannten Mengen;
ii) Vermischen der Bestandteile a) bis e) bzw. a) bis g), wobei zunächst die Bestandteile mit einer mittleren Partikelgrösse d₅₀ im Nanometerbereich und/oder die Bestandteile mit einem hohen Blaine-Wert miteinander vermischt, dann die Bestandteile mit einer mittleren Partikelgrösse d₅₀ im Makrometerbereich, und/oder die Bestandteile mit einem niedrigen Blaine-Wert zugemischt und anschliessend die Bestandteile mit einer mittleren Partikelgrösse d₅₀ im Mikrometerbereich, und/oder die Bestandteile mit einem mittleren Blaine-Wert zugemischt werden.

Die Schritte werden im Folgenden näher erläutert:
Die unterschiedlichen Feinheiten der Bestandteile des Compounds bedingen eine unterschiedliche individuelle Rieseleigenschaft der Komponenten sowie letztendlich eine Rieseleigenschaft des Compounds, welche entsprechend steuerbar ist. Somit sind die individuellen Feinheiten und die Reihenfolge der Beimischung wichtige Parameter für die Herstellung, Verwendung und Dosierung des Compounds.

Durch das erfindungsgemässe Herstellungsverfahren wird sichergestellt, dass die gewünschte Homogenität und Rieseleigenschaft des Compounds gegeben ist.

Im Herstellungsverfahren des Compounds werden zuerst die sehr feinen Partikel, d.h. die Nanopartikel der Bestandteile a) bzw. a1), b), und d) mit den gröberen Komponenten, den Makropartikel der Bestandteile c) und e) vermischt. Anschliessend werden die Komponenten mit der mittleren Feinheit, d.h. die Mikropartikel des Bestandteils a) bzw. a2) in einem grossen Zweiwellen-Industriemischer eingemischt.

In einer Ausführungsform des erfindungsgemässen Verfahrens zur Herstellung eines Compounds, welches auch die Bestandteile f) und g) enthält, werden die Nanopartikel des Bestandteils a) bzw. die Bestandteile a1), b), d), f) und g) miteinander in beliebiger Reihenfolge vermischt. Desweiteren werden die Bestandteile c) und e) eingemischt. Anschliessend werden die Mikropartikel des Bestandteils a) bzw. der Bestandteil a2) eingemischt.

### Beton

Gegenstand der Erfindung sind auch Betone, welche die erfindungsgemässe Zusammensetzung enthalten.

Bevorzugt enthält der Beton die erfindungsgemässe Zusammensetzung in einer Menge von 10 bis 100 kg/m³ Beton, besonders bevorzugt in einer Menge von 30 bis 80 kg/m³ Beton, wobei sich die Menge jeweils auf das Gesamtgewicht des Betons bezieht.

Mit Zugabe der erfindungsgemässen Zusammensetzung sowie ggf. einem weiteren reaktiven Zusatzstoff lässt sich der Zementgehalt im Beton signifikant reduzieren, was zu einer maximalen Reduktion des CO₂-Fussabdruckes führt.

Aus Kostengründen wird meistens eine Mischung der erfindungsgemässen Zusammensetzung mit einem weiteren reaktiven Zusatzstoff wie aktiviertem Phonolith oder Flugaschen oder deren Mischungen eingesetzt. Hierbei ist die Verwendung von aktiviertem Phonolith bevorzugt, da Flugasche häufig eine schwankende Qualität aufweisen kann und eventuell in Zukunft durch Abstellen von Kohlekraftwerken nicht mehr in ausreichender Menge erhältlich ist. Statt des aktivierten Phonoliths oder der Flugasche oder deren Mischungen könnten auch andere Komponenten mit hydraulischer Aktivität wie Puzzolane oder deren Mischung mit aktiviertem Phonolith oder Flugasche eingesetzt werden.

Hierbei wird die erfindungsgemässe Zusammensetzung mit dem weiteren Zusatzstoff mit hydraulischen Aktivitäten, wobei es sich insbesondere um aktiviertes Phonolith wie beispielsweise Hydrolith^{®} F200 handelt, im Gewichtsverhältnis von 30:70 bis 70:30 gemischt. Alternativ wird die erfindungsgemässe Zusammensetzung mit geeigneter Flugasche, d.h. mit latent hydraulischen Eigenschaften und ohne Verunreinigungen, im Gewichtsverhältnis von 30:70 bis 70:30 gemischt. Auch Gemische von Flugasche und aktiviertem Phonolith oder weiteren Puzzolanen sind mit der erfindungsgemässen Zusammensetzung, insbesondere in den genannten Mengenverhältnissen, mischbar.

Daher ist Gegenstand der Erfindung auch ein Beton, in dem 30 bis 40 Gew.-%, bevorzugt 35 bis 40 Gew.-%, des Zements durch eine Mischung der erfindungsgemässen Zusammensetzung mit entweder aktiviertem Phonolith oder Flugasche oder einem anderen Zusatzstoff mit hydraulischer Aktivität wie bereits oben genannt im Verhältnis von 70:30 bis 30:70 Gew.-% ersetzt wurden.

Durch die erfindungsgemässe Zusammensetzung ist es möglich, die Menge an Zement ausgehend von beispielsweise 280 kg Zement pro m³ Beton um 30 - 55 Gew.-%d.h. um 80 - 150 kg Zement pro m³ Beton, bevorzugt um 30 bis 52 Gew.-%, d.h. um 80 bis 145 kg Zement pro m³ Beton, besonders bevorzugt um 32 bis 50 Gew.-% d.h. um 90 - 140 kg Zement pro m³ Beton, zu reduzieren, so dass bevorzugt ein Beton mit 135 bis 200 kg Zement pro m³ Beton erhalten wird, besonders bevorzugt ein Beton mit 140 bis 190 kg Zement pro m³ Beton.

Dieser "neue" Beton erfüllt die bisherigen Anforderungen an Frischsowie Festbeton. Diese Anforderungen sind produktspezifisch bekannt bzw. normiert und beispielsweise der europäischen Norm EN 206, bzw. der Schweizer Norm SN EN 206, zu entnehmen, welche Betone nach Eigenschaften mit Grenzwerten der Zusammensetzung definiert sowie die Zemente und Zusatzstoffe des Typs II für die Verwendung in Beton freigibt, der in Expositions- und Unterklassen eingeteilt ist. Weitere gängige Betonsorten können ebenfalls mit einem signifikant verringerten CO₂-Fussabdruck, wie oben aufgeführt, hergestellt werden.

Neben der erfindungsgemässen Zusammensetzung können die Betone noch weitere Betonzusatzstoffe mit latent hydraulischer Eigenschaft enthalten. Für die Optimierung der neuen Betone ist das Mengenverhältnis zwischen dem erfindungsgemässen Compound und den zusätzlichen Betonzusatzstoffen ausschlaggebend für die Zementreduktion. Betonzusatzstoffe sind im Allgemeinen fein verteilte Stoffe, die bestimmte Betoneigenschaften beeinflussen und als grossen Volumenbestandteil des Betons zu berücksichtigen sind.

Im Weiteren werden Zusatzmittel eingesetzt. Diese werden der Betonmischung meist in geringen Mengen zugesetzt, um durch chemische oder physikalische Wirkung bestimmte Eigenschaften des Frischbetons und/oder des erhärteten Betons zu beeinflussen. Es werden die folgenden Wirkgruppen unterschieden, Betonverflüssiger, Fliessmittel, Luftporenbildner, Dichtungsmittel, Abbindeverzögerer, Abbindebeschleuniger, Stabilisierer und dergleichen. Ihr Volumenanteil ist dabei in der Betonmischung vernachlässigbar.

Gegenstand der Erfindung ist auch die Verwendung der erfindungsgemässen Zusammensetzung als Bindemittel in Beton, sowie deren Verwendung als Ersatz für Zement.

Die Erfindung wird nun anhand des folgenden, nicht limitierenden Beispiels näher erläutert.

### Beispiel 1: Beispiel für eine erfindungsgemässe Zusammensetzung

Das Gesamtgewicht der Zusammensetzung beträgt 1000 kg. Die einzelnen Bestandteile sind wie folgt:

| **Bestandteile der Zusammensetzung** | **Menge und Art des Bestandteils** |
|---|---|
| Bestandteil a1) | 215 kg eines Kalksteinmehls mit einer mittleren Partikelgrösse d₅₀ kleiner gleich 1 µm und einem Blaine-Wert von 86'000 cm²/g |
| Bestandteil a2) | 200 kg eines Kalksteinmehls mit einer mittleren Partikelgrösse d₅₀ im Bereich von 2-3 µm und einem Blaine-Wert von ca. 11'400 cm²/g |
| Bestandteil b) | 15 kg Microsilica mit mit einer Primärkörnung im Bereich von 0,1 bis 0,3 µm und einer spezifischen Oberfläche im Bereich von 18-22 m²/g, |
| Bestandteil c) | 200 kg eines aktivierten Phonoliths mit einer Dichte von 2,5-2,6 g/cm³ |
| Bestandteil d) | 64 kg eines Kieswerkfüllers |
| Bestandteil e) | 300 kg eines Kalkhydrats, welcher bei einem 0.2 mm-Sieb einen Siebdurchgang von ca. 100 Gew.%, bei einem 0.09 mm-Sieb einen Siebdurchgang von ca. 99 Gew.%, und bei einem 0.063 mm-Sieb einen Siebdurchgang von ca. 98 Gew.-% aufweist und einer BET-Oberfläche von 18-21 m²/g |
| Bestandteil f) | 5 kg eines pulverförmigen Fliessmittels mit einer Schüttdichte von 0,6 g/cm³ |
| Bestandteil g) | 1 kg eines pulverförmigen Schwindreduzierers mit einer Schüttdichte von ca. 0,6 g/cm³ |

### Beispiel 2: Herstellung einer erfindungsgemässen Zusammensetzung

Die in Beispiel 1 genannten Bestandteile a1), b), d), f) und g) werden in einem 2-Wellenmischer einer industriellen Mischanlage zuerst miteinander vermischt. Dann werden der Bestandteil a2) sowie die Bestandteile c) und e) zugemischt, um die erfindungsgemässe Zusammensetzung zu erhalten.

### Beispiel 3: Herstellung eines erfindungsgemässen Betons

55,0 kg der in Beispiel 2 hergestellten erfindungsgemässen Zusammensetzung werden mit 180 kg Portlandkompositzement (Blaine-Wert: 4600 cm²/g, Schüttdichte: ca. 1040 kg/m³, Dichte: ca. 3050 kg/m³), 50,0 kg aktiviertem Phonolith mit einer Dichte von 2,5-2,6 g/cm³ und 1,4 kg eines wässrigen Fliessmittels, wie beispielsweise eines modifizierten Polycarboxylats in Wasser, mit einem Feststoffgehalt von ca. 34 Gew.-% zu einem Hochbaubeton der Klasse C vermischt, wobei sich die Mengen jeweils auf 1 m³ Beton beziehen.

Die unten genannten Parameter werden gemäss der Betonnorm SN EN 206:2013 (2. Auflage) bestimmt.

Der so erhaltene Frischbeton weist einen Wassergehalt W₀ von 144 I pro m³ Beton, einen Luftporengehalt von 1,2 Vol.-% sowie eine Rohdichte von 2444 kg/m³ auf. Die Konsistenz F gemessen mittels Ausbreitmass beträgt 5 Minuten nach Produktion (t₀) 500 mm und 30 Minuten nach Produktion (t₁) 490 mm. Die Wassermenge W_{G}, also die Menge an Wasser, die die Gesteinskörnung in 24 Stunden aufnimmt, beträgt 27,1 I pro m³ Beton.

Der mit der erfindungsgemässen Zusammensetzung erhaltene Festbeton weist nach einem Tag eine Druckfestigkeit DF von 11,4 N/mm² auf, was ein Ausschalen nach einem Tag ermöglicht. Die Druckfestigkeit DF nach 28 Tagen beträgt 49,6 N/mm2 und übertrifft damit sogar die Anforderungen (Zielwert DF = 43-44), die an einen derartigen Beton gestellt werden.

Zudem wird der Karbonatisierungswiderstand des mit der erfindungsgemässen Zusammensetzung erhaltenen Festbetons der Klasse C gemessen, was ein Mass für die Nutzungsdauer ist. Dieser sog. TT-1-Wert beträgt ≤ 5.1 mm/Jahr für 50 Jahre, was im Bereich des gewünschten Grenzwerts (TT-1 ≤ 5.0) ist.

### Beispiel 4-5: Vergleichsbeispiele

Es werden Betone gemäss der nachfolgenden Tabelle hergestellt, in denen 75 kg bzw. 107 kg Zement durch 75 kg bzw. 107 kg aktiviertes Phonolith ersetzt werden, wobei sich die Mengen jeweils auf 1 m³ Beton beziehen.

| **Beispiel / Inhaltsstoffe [Menge]** | **4** | **5** |
|---|---|---|
| Portlandzement | 230 kg/m³ | 198 kg/m³ |
| Aktiviertes Phonolith | 75,0 kg/m³ | 107,0 kg/m³ |
| Fliessmittel | 0,80 kg/m³ | 1,80 kg/m³ |
| Frühfestigkeit nach 1 Tag | Nicht bestimmt | 5-6 N/mm² |
| Druckfestigkeit nach 28 Tagen | 40,0 N/mm² | 44.4 N/mm² |
| Karbonatisierungswiderstand TT-1 | Nicht bestimmt | 6,2 mm/Jahr^{0.5} |

Die Druckfestigkeit des Betons nach Beispiel 4 nach 28 Tagen betrug 40,0 N/mm² und ist zu gering (Zielwert: 43-44).

Die Druckfestigkeit des Betons nach Beispiel 5 nach 1 Tag betrug 5-6 N/mm² nach einem Tag, was kein Ausschalen nach einem Tag ermöglicht. Der Karbonatisierungswiderstand betrug 6,2 mm/Jahr^{0.5} und ist daher deutlich über dem gewünschten Zielwert von 5.0 mm/Jahr^{0.5}, so dass eine reduzierte Dauerhaftigkeit gegeben ist.

## Patentansprüche

1. Eine Zusammensetzung zur Herstellung von Beton enthaltend
a) 0.5 - 60 Gew.-% Calciumcarbonat, wobei das Calciumcarbonat einen Blaine-Wert von 3'000 bis 150'000 cm²/g aufweist;
b) 0.5 - 10 Gew.-% Siliciumdioxid, wobei das Siliciumdioxid einen Blaine-Wert von etwa 100'000 bis 300'000 cm²/g aufweist;
c) 5 - 40 Gew.-% einer Komponente c) mit latent hydraulischer Aktivität, wobei die Komponente c) einen Blaine-Wert von 1'000 bis 7'000 cm²/g hat;
d) 5 - 45 Gew.-% Calciumhydroxid, wobei das Calciumhydroxid eine Partikelgrössenverteilung hat, welche bei einem 0.063 mm-Sieb einen Siebdurchgang von 98 Gew.-% aufweist;
e) 1 - 25 Gew.-% Kieswerkfüller, wobei der Kieswerkfüller e) eine Partikelgrössenverteilung hat, welche bei einem 0.063 mm-Sieb einen Siebdurchgang von ca. 70 Gew.% und bei einem 0.125 mm-Sieb einen Siebdurchgang von ca. 90 Gew.-% aufweist, und/oder einen Blaine-Wert im Bereich von 500 bis 5'000 cm²/g hat;
f) optional 0.05 - 5 Gew.-% Fliessmittel, und
g) optional 0.05 - 5 Gew.-% Schwindreduzierer,
wobei sich die Menge jeweils auf das Gesamtgewicht der Zusammensetzung bezieht, und wobei die Summe aller Bestandteile a) bis g) der Zusammensetzung 100 Gew.-% ergeben.

2. Die Zusammensetzung nach Anspruch 1, **dadurch gekennzeichnet, dass** das Calciumcarbonat a) Kalksteinmehl ist, wobei das Kalksteinmehl bevorzugt ein Gemisch von Bestandteilen a1) und a2) mit unterschiedlichen mittleren Partikelgrössen d₅₀, unterschiedlichen spezifischen Oberflächen und/oder unterschiedlichen Blaine-Werten ist.

3. Die Zusammensetzung nach einem oder mehreren der vorherigen Ansprüche, **dadurch gekennzeichnet, dass** das Siliciumdioxid b) bevorzugt in einer Menge von 1 bis 5 Gew.-%, besonders bevorzugt in einer Menge von 1,2 bis 4,0 Gew.-%, ganz besonders bevorzugt in einer Menge von 1,3 bis 3,0 Gew.-%, in der Zusammensetzung vorliegt, wobei sich die Menge auf das Gesamtgewicht der Zusammensetzung bezieht.

4. Die Zusammensetzung nach einem oder mehreren der vorherigen Ansprüche, **dadurch gekennzeichnet, dass** der Bestandteil c) ein Puzzolan, Flugasche oder aktiviertes Phonolith oder eine Mischung davon ist, bevorzugt dass der Bestandteil c) Flugasche oder aktiviertes Phonolith oder eine Mischung davon ist, besonders bevorzugt, dass der Bestandteil c) aktiviertes Phonolith ist; und/oder dass der Bestandteil c) bevorzugt in einer Menge von 10 bis 28 Gew.-%, besonders bevorzugt in einer Menge von 12 bis 26 Gew.-%, ganz besonders bevorzugt in einer Menge von 13 bis 23 Gew.-%, in der Zusammensetzung vorliegt, wobei sich die Menge auf das Gesamtgewicht der Zusammensetzung bezieht.

5. Die Zusammensetzung nach einem oder mehreren der vorherigen Ansprüche, **dadurch gekennzeichnet, dass** das Calciumhydroxid d) eine BET-Oberfläche im Bereich von 10'000 bis 30'000 cm²/g hat, und/oder bevorzugt in einer Menge von 15 bis 40 Gew.-%, besonders bevorzugt in einer Menge von 20 bis 36 Gew.-%, ganz besonders bevorzugt in einer Menge von 25 bis 33 Gew.-% in der Zusammensetzung vorliegt, wobei sich die Menge auf das Gesamtgewicht der Zusammensetzung bezieht.

6. Die Zusammensetzung nach einem oder mehreren der vorherigen Ansprüche, **dadurch gekennzeichnet, dass** der Kieswerkfüller e) bevorzugt in einer Menge von 1,5 bis 20 Gew.-%, besonders bevorzugt in einer Menge von 2 bis 15 Gew.-%, ganz besonders bevorzugt in einer Menge von 3 bis 10 Gew.-%, in der Zusammensetzung vorliegt, wobei sich die Menge auf das Gesamtgewicht der Zusammensetzung bezieht.

7. Die Zusammensetzung nach einem oder mehreren der vorherigen Ansprüche, **dadurch gekennzeichnet, dass** das Fliessmittel f) bevorzugt in einer Menge von 0,05 bis 1,0 Gew.-%, besonders bevorzugt in einer Menge von 0,1 bis 0,8 Gew.-%, ganz besonders bevorzugt in einer Menge von 0,3 bis 0,7 Gew.-% in der Zusammensetzung vorliegt, wobei sich die Menge auf das Gesamtgewicht der Zusammensetzung bezieht.

8. Die Zusammensetzung nach einem oder mehreren der vorherigen Ansprüche, **dadurch gekennzeichnet, dass** der Schwindreduzierer g) bevorzugt in einer Menge von 0,05 bis 1,0 Gew.-%, besonders bevorzugt in einer Menge von 0,06 bis 0,8 Gew.-%, ganz besonders bevorzugt in einer Menge von 0,08 bis 0,12 Gew.-%, in der Zusammensetzung vorliegt, wobei sich die Menge auf das Gesamtgewicht der Zusammensetzung bezieht.

9. Ein Verfahren zur Herstellung einer Zusammensetzung nach einem oder mehreren der Ansprüche 1-8 enthaltend die folgenden Schritte:
i) Bereitstellen der Bestandteile a) bis e) bzw. a) bis g) in den genannten Mengen;
ii) Vermischen der Bestandteile a) bis e) bzw. a) bis g), wobei zunächst die Bestandteile mit einer mittleren Partikelgrösse d₅₀ im Nanometerbereich und/oder die Bestandteile mit einem hohen Blaine-Wert miteinander vermischt, dann die Bestandteile mit einer mittleren Partikelgrösse d₅₀ im Makrometerbereich, und/oder die Bestandteile mit einem niedrigen Blaine-Wert zugemischt und anschliessend die Bestandteile mit einer mittleren Partikelgrösse d₅₀ im Mikrometerbereich, und/oder die Bestandteile mit einem mittleren Blaine-Wert zugemischt werden;
wobei die Bestandteile mit einer mittleren Partikelgrösse d₅₀ im Nanometerbereich und die Bestandteile mit einem hohen Blaine-Wert die Nanopartikel des Bestandteils a) bzw. der Bestandteil a1), sowie die Bestandteile b) und d), und, falls vorhanden, die Bestandteile f) und g) sind; wobei die Bestandteile mit einer mittleren Partikelgrösse d₅₀ im Makrometerbereich und die Bestandteile mit einem niedrigen Blaine-Wert die Bestandteile c) und e) sind; und
wobei die Bestandteile mit einer mittleren Partikelgrösse d₅₀ im Mikrometerbereich und die Bestandteile mit einem mittleren Blaine-Wert die Mikropartikel des Bestandteils a) bzw. der Bestandteil a2) sind.

10. Eine Betonvormischung enthaltend die Zusammensetzung als Bindemittelvormischung hergestellt nach einem Verfahren nach Anspruch 9 und optional eine Komponente mit latent hydraulischer Aktivität, wobei bei Anwesenheit dieser Komponente das Gewichtsverhältnis von Zusammensetzung zur Komponente mit latent hydraulischer Aktivität bevorzugt im Bereich von 30:70 bis 70:30 liegt, wobei die Komponente mit latent hydraulischer Aktivität bevorzugt ein Puzzolan, Flugasche oder aktiviertes Phonolith oder eine Mischung davon ist.

11. Ein Beton hergestellt mit einer Betonvormischung gemäss Anspruch 10.

12. Der Beton nach Anspruch 11, **dadurch gekennzeichnet, dass** die Menge der Zusammensetzung pro m³ Beton in einem Bereich von 10 bis 100 kg/m³, bevorzugt in einem Bereich von 30 bis 80 kg/m³ liegt.

13. Der Beton nach Anspruch 11 und/oder 12, **dadurch gekennzeichnet, dass** 30 bis 40 Gew.-%, bevorzugt 35 bis 40 Gew.-%, des Zements durch eine Mischung der Zusammensetzung gemäss einer der Ansprüche 1 bis 8 **und** einer Komponente c) mit latent hydraulischer Aktivität ersetzt ist, wobei das Gewichtsverhältnis von Zusammensetzung **zur** Komponente c) mit latent hydraulischer Aktivität bevorzugt im Bereich von 30:70 bis 70:30 liegt, wobei wobei die Komponente c) bevorzugt ein Puzzolan, Flugasche oder aktiviertes Phonolith oder eine Mischung davon ist, wobei besonders bevorzugt die Komponente c) Flugasche oder aktiviertes Phonolith oder eine Mischung davon ist, wobei ganz besonders bevorzugt die Komponente c) aktiviertes Phonolith ist.

14. Der Beton nach Anspruch 11 und/oder 12, **dadurch gekennzeichnet, dass** der Anteil an Zement im Beton um 30 bis 55 Gew.-%, besonders bevorzugt um 30 bis 52 Gew.-%, reduziert ist.

15. Verwendung der Zusammensetzung nach einem oder mehreren der Ansprüche 1-9 oder ihrer Mischung mit einer Komponente mit latent hydraulischer Aktivität als Bindemittel in Beton und/oder als teilweiser Ersatz für Zement.

## Claims

1. A composition for the production of concrete containing
a) 0.5 - 60 per cent by weight calcium carbonate, whereby the calcium carbonate has a Blaine value of 3,000 to 150,000 cm²/g;
b) 0.5 - 10 per cent by weight silicon dioxide, whereby the silicon dioxide has a Blaine value of approximately 100,000 to 300,000 cm²/g;
c) 5-40 per cent by weight of a component c) with latent hydraulic activity, whereby the component c) has a Blaine value of 1,000 to 7,000 cm²/g;
d) 5 - 45 per cent by weight calcium hydroxide, whereby the calcium hydroxide has a particle size distribution which has a sieve passage of 98 per cent by weight on a 0.063 mm sieve;
e) 1-25 per cent by weight gravel filler, wherein the gravel filler e) has a particle size distribution which exhibits a sieve passage of approximately 70 per cent by weight on a 0.063 mm sieve and a sieve passage of approximately 90 per cent by weight on a 0.125 mm sieve, and/or has a Blaine value in the range of 500 to 5,000 cm²/g;
f) optionally 0.05-5 per cent by weight superplasticiser, and
g) optionally 0.05-5 per cent by weight shrinkage reducer,
whereby the quantity refers to the total weight of the composition, and whereby the sum of all components a) to g) of the composition amounts to 100 per cent by weight.

2. The composition according to claim 1, **characterized in that** the calcium carbonate is a) limestone powder, whereby the limestone powder is preferably a mixture of components a1) and a2) with different average particle sizes d₅₀, different specific surface areas and/or different Blaine values.

3. The composition according to one or more of the preceding claims, **characterized in that** the silicon dioxide b) is preferably present in an amount of 1 to 5 per cent by weight, particularly preferably in an amount of 1.2 to 4.0 per cent by weight, most particularly preferably in an amount of 1.3 to 3.0 per cent by weight, in the composition, whereby the amount refers to the total weight of the composition.

4. The composition according to one or more of the preceding claims, **characterized in that** component c) is a pozzolan, fly ash or activated phonolite or a mixture thereof, preferably component c) is fly ash or activated phonolite or a mixture thereof, particularly preferably component c) is activated phonolite; and/or that component c) is preferably present in the composition in an amount of 10 to 28 per cent by weight, particularly preferably in an amount of 12 to 26 per cent by weight, especially preferably in an amount of 13 to 23 per cent by weight, the amount referring to the total weight of the composition.

5. The composition according to one or more of the preceding claims, **characterized in that** the calcium hydroxide d) has a BET surface area in the range of 10,000 to 30,000 cm²/g, and/or preferably in an amount of 15 to 40 per cent by weight, particularly preferably in an amount of 20 to 36 per cent by weight, and most preferably in an amount of 25 to 33 per cent by weight in the composition, the amount referring to the total weight of the composition.

6. The composition according to one or more of the preceding claims, **characterized in that** the gravel plant filler e) is preferably present in an amount of 1.5 to 20 per cent by weight, particularly preferably in an amount of 2 to 15 per cent by weight, most particularly preferably in an amount of 3 to 10 per cent by weight, in the composition, the amount referring to the total weight of the composition.

7. The composition according to one or more of the preceding claims, **characterized in that** the superplasticiser f) is preferably present in the composition in an amount of 0.05 to 1.0 per cent by weight, particularly preferably in an amount of 0.1 to 0.8 per cent by weight, and most particularly preferably in an amount of 0.3 to 0.7 per cent by weight, the amount referring to the total weight of the composition.

8. The composition according to one or more of the preceding claims, **characterized in that** the shrinkage reducer g) is preferably present in an amount of 0.05 to 1.0 per cent by weight, particularly preferably in an amount of 0.06 to 0.8 per cent by weight, most particularly preferably in an amount of 0.08 to 0.12 per cent by weight, in the composition, the amount referring to the total weight of the composition.

9. A method for the production of a composition according to one or more of the claims 1 to 8, containing the following steps:
i) Providing components a) to e) or a) to g) in the specified quantities;
ii) Mixing components a) to e) or a) to g), whereby the components with an average particle size d₅₀ in the nanometer range and/or the components with a high Blaine value are first mixed together, then the components with an average particle size d₅₀ in the macrometer range, and/or the components with a low Blaine value are added, and finally the components with a mean particle size d₅₀ in the micrometer range and/or the components with a mean Blaine value are added;
whereby the components with a mean particle size d₅₀ in the nanometer range and the components with a high Blaine value are the nanoparticles of component a) or component a1), as well as components b) and d), and, if present, components f) and g);
whereby the components with a mean particle size d₅₀ in the macrometer range and the components with a low Blaine value are components c) and e); and
whereby the components with a mean particle size d₅₀ in the micrometer range and the components with a mean Blaine value are the microparticles of component a) and component a2), respectively.

10. A concrete premix comprising the composition as a binder premix produced according to a method according to claim 9 and optionally a component with latent hydraulic activity, whereby, in the presence of this component, the weight ratio of the composition to the component with latent hydraulic activity is preferably in the range of 30:70 to 70:30, whereby the component with latent hydraulic activity is preferably a pozzolan, fly ash or activated phonolite or a mixture thereof.

11. A concrete produced with a concrete premix according to claim 10.

12. The concrete according to claim 11, **characterized in that** the amount of the composition per m³ of concrete is in a range of 10 to 100 kg/m³, preferably in a range of 30 to 80 kg/m³.

13. The concrete according to claim 11 and/or 12, **characterized in that** 30 to 40 per cent by weight, preferably 35 to 40 per cent by weight, of the cement is replaced by a mixture of the composition according to one of claims 1 to 8 and a component c) with latent hydraulic activity, whereby the weight ratio of the composition to component c) with latent hydraulic activity is preferably in the range of 30:70 to 70:30, whereby component c) is preferably a pozzolan, fly ash or activated phonolite or a mixture thereof, whereby component c) is particularly preferably fly ash or activated phonolite or a mixture thereof, whereby component c) is most particularly preferably activated phonolite.

14. The concrete according to claim 11 and/or 12, **characterized in that** the proportion of cement in the concrete is reduced by 30 to 55% by weight, particularly preferably by 30 to 52% per cent by weight.

15. Use of the composition according to one or more of claims 1 to 9 or its mixture with a component having latent hydraulic activity as a binder in concrete and/or as a partial substitute for cement.

## Revendications

1. Composition pour la production de béton contenant
a) 0,5 à 60 % en poids de carbonate de calcium, le carbonate de calcium ayant une valeur Blaine comprise entre 3 000 et 150 000 cm²/g;
b) 0,5 à 10 % en poids de dioxyde de silicium, le dioxyde de silicium ayant une valeur Blaine d'environ 100 000 à 300 000 cm²/g;
c) 5 à 40 % en poids d'un composant c) à activité hydraulique latente, le composant c) ayant une valeur Blaine comprise entre 1 000 et 7 000 cm²/g;
d) 5 à 45 % en poids d'hydroxyde de calcium, l'hydroxyde de calcium ayant une distribution granulométrique avec un passage au tamis de 98 % en poids sur un tamis de 0,063 mm;
e) 1 à 25 % en poids de gravier de remplissage, dans lequel le gravier de remplissage e) a une distribution granulométrique qui présente un passage au tamis d'environ 70 % en poids sur un tamis de 0,063 mm et un passage au tamis d'environ 90 % en poids sur un tamis de 0,125 mm, et/ou a une valeur Blaine comprise entre 500 et 5 000 cm²/ g;
f) éventuellement 0,05 à 5 % en poids de fluidifiant, et
g) éventuellement 0,05 à 5 % en poids de réducteur de retrait,
la quantité se rapportant au poids total de la composition, et la somme de tous les composants a) à g) de la composition s'élevant à 100 % en poids.

2. Composition selon la revendication 1, **caractérisée en ce que** le carbonate de calcium est a) de la poudre de calcaire, la poudre de calcaire étant de préférence un mélange des composants a1) et a2) ayant des tailles moyennes de particules d₅₀ différentes, des surfaces spécifiques différentes et/ou des valeurs Blaine différentes.

3. Composition selon une ou plusieurs des revendications précédentes, **caractérisée en ce que** le dioxyde de silicium b) est de préférence présent en une quantité de 1 à 5 % en poids, de encore plus préférée en une quantité de 1,2 à 4,0 % en poids, de manière particulièrement préférée en une quantité de 1,3 à 3,0 % en poids, dans la composition, la quantité se rapportant au poids total de la composition.

4. Composition selon une ou plusieurs des revendications précédentes, **caractérisée en ce que** le composant c) est une pouzzolane, des cendres volantes ou une phonolite activée ou un mélange de ceux-ci, de préférence le composant c) est constitué de cendres volantes ou de phonolite activée ou d'un mélange de celles-ci, de manière particulièrement préférée le composant c) est constitué de phonolite activée ; et/ou **en ce que** le composant c) est de préférence présent dans la composition en une quantité de 10 à 28 % en poids, de préférence en une quantité de 12 à 26 % en poids, de préférence en une quantité de 13 à 23 % en poids, la quantité se rapportant au poids total de la composition.

5. Composition selon une ou plusieurs des revendications précédentes, **caractérisée en ce que** l'hydroxyde de calcium d) a une surface spécifique BET comprise entre 10 000 et 30 000 cm²/g, et/ou de préférence en une quantité de 15 à 40 % en poids, de manière particulièrement préférée en une quantité de 20 à 36 % en poids, et de manière encore plus préférée en une quantité de 25 à 33 % en poids dans la composition, la quantité se rapportant au poids total de la composition.

6. Composition selon une ou plusieurs des revendications précédentes, **caractérisée en ce que** la charge de gravier e) est de préférence présente en une quantité de 1,5 à 20 % en poids, de manière encore plus préférée en une quantité de 2 à 15 % en poids, de manière particulièrement préférée en une quantité de 3 à 10 % en poids, dans la composition, la quantité se rapportant au poids total de la composition.

7. Composition selon une ou plusieurs des revendications précédentes, **caractérisée en ce que** le superplastifiant f) est de préférence présent dans la composition en une quantité de 0,05 à 1,0 % en poids, de préférence en une quantité de 0,1 à 0,8 % en poids, et plus particulièrement en une quantité de 0,3 à 0,7 % en poids, la quantité se rapportant au poids total de la composition.

8. Composition selon une ou plusieurs des revendications précédentes, **caractérisée en ce que** l'agent réducteur de retrait g) est de préférence présent en une quantité de 0,05 à 1,0 % en poids, de préférence en une quantité de 0,06 à 0,8 % en poids, de manière particulièrement préférée en une quantité de 0,08 à 0,12 % en poids, dans la composition, la quantité se rapportant au poids total de la composition.

9. Procédé de fabrication d'une composition selon une ou plusieurs des revendications 1 à 8, comprenant les étapes suivantes:
i) Fournir les composants a) à e) ou a) à g) dans les quantités spécifiées;
ii) Mélanger les composants a) à e) ou a) à g), en mélangeant d'abord les composants ayant une taille moyenne de particules d₅₀ de l'ordre du nanomètre et/ou les composants ayant une valeur Blaine élevée, puis en ajoutant les composants ayant une taille moyenne de particules d₅₀ de l'ordre du macromètre et/ou les composants ayant une valeur Blaine faible, et enfin les composants ayant une taille moyenne de particules d₅₀ de l'ordre du micromètre et/ou les composants ayant une valeur Blaine moyenne sont ajoutés;
les composants ayant une taille moyenne de particules d₅₀ de l'ordre du nanomètre et les composants ayant une valeur Blaine élevée étant les nanoparticules du composant a) ou du composant a1), ainsi que les composants b) et d) et, le cas échéant, les composants f) et g);
les composants ayant une taille moyenne de particules d₅₀ de l'ordre du macromètre et les composants ayant une valeur Blaine faible étant les composants c) et e); et
les composants ayant une taille moyenne de particules d₅₀ de l'ordre du micromètre et les composants ayant une valeur Blaine moyenne étant respectivement les microparticules du composant a) et du composant a2).

10. Prémélange de béton comprenant la composition en tant que prémélange de liant produit selon un procédé selon la revendication 9 et, éventuellement, un composant à activité hydraulique latente, dans lequel, en présence de ce composant, le rapport pondéral entre la composition et le composant à activité hydraulique latente est de préférence compris entre 30:70 et 70:30, le composant à activité hydraulique latente étant de préférence une pouzzolane, des cendres volantes ou de la phonolite activée ou un mélange de ceux-ci.

11. Béton produit à partir d'un prémélange de béton selon la revendication 10.

12. Béton selon la revendication 11, **caractérisé en ce que** la quantité de la composition par m³ de béton est comprise entre 10 et 100 kg/m³, de préférence entre 30 et 80 kg/m³.

13. Béton selon la revendication 11 et/ou 12, **caractérisé en ce que** 30 à 40 % en poids, de préférence 35 à 40 % en poids, du ciment sont remplacés par un mélange de la composition selon l'une des revendications 1 à 8 et d'un composant c) à activité hydraulique latente, le rapport pondéral entre la composition et le composant c) ayant une activité hydraulique latente est de préférence compris entre 30:70 et 70:30, le composant c) étant de préférence une pouzzolane, des cendres volantes ou une phonolite activée ou un mélange de ceux-ci, le composant c) étant de manière particulièrement préférée des cendres volantes ou une phonolite activée ou un mélange de ceux-ci, le composant c) étant de manière particulièrement préférée une phonolite activée.

14. Béton selon la revendication 11 et/ou 12, **caractérisé en ce que** la proportion de ciment dans le béton est réduite de 30 à 55 % en poids, de préférence de 30 à 52 % en poids.

15. Utilisation de la composition selon une ou plusieurs des revendications 1 à 9 ou de son mélange avec un composant ayant une activité hydraulique latente comme liant dans le béton et/ou comme substitut partiel du ciment.
